# EUROPÄISCHE PATENTSCHRIFT

(11) **EP 3 003 674 B1**
(45) Veröffentlichungstag und Bekanntmachung des Hinweises auf die Patenterteilung: **08.04.2020**
(21) Anmeldenummer: 14725641.6
(22) Anmeldetag: 20.05.2014
(51) Int. Cl.: B29C 45/00, B29C 45/14, B29L 31/00

(54) **VERFAHREN ZUM HERSTELLEN EINES VERBINDUNGSTEILS, NACH DEM VERFAHREN HERGESTELLTES VERBINDUNGSTEIL, WERKZEUG ZUM HERSTELLEN EINES SOLCHEN VERBINDUNGSTEILS UND BEFESTIGUNGSSYSTEM MIT EINEM DERARTIGEN VERBINDUNGSTEIL**
PROCESS FOR MANUFACTURING A CONNECTION ELEMENT, A CONNECTION ELEMENT ACCORDING TO THE PROCESS, A MOLD FOR REALISING THE PROCESS AND A CONNECTION SYSTEM WITH SUCH A CONNECTION ELEMENT,
PROCÉDÉ DE FABRICATION UN ÉLÉMENT CONNEXION, UN TEL ÉLÉMENT CONNEXION, UN MOULE POUR REALISER LEQUEL PROCÉCÉ ET UNE SYSTÈME DE CONNEXION UTILISE UN TEL ÉLÉMENT CONNEXION,

(30) Priorität: 28.05.2013 DE 102013009091
(43) Veröffentlichungstag der Anmeldung: 13.04.2016
(73) Patentinhaber: Gottlieb Binder GmbH & Co. KG, 71088 Holzgerlingen (DE)
(72) Erfinder: POULAKIS, Konstantinos, Dr., 71157 Hildrizhausen (DE)
(74) Vertreter: Bartels und Partner, Patentanwälte
(86) Internationale Anmeldenummer: PCT/EP2014/001356
(87) Internationale Veröffentlichungsnummer: WO 2014/191088

(56) Entgegenhaltungen:
- EP-A1- 0 465 983
- EP-A1- 1 481 603
- EP-A2- 0 246 221
- WO-A1-92/19119
- WO-A2-2009/103260
- DE-A1-102009 054 896
- DE-A1-102011 104 886
- DE-U1- 9 412 527
- JP-A- H05 211 910
- US-A- 4 842 916
- US-A- 5 058 245
- US-A1- 2002 112 324
- US-A1- 2005 189 811
- US-A1- 2008 169 388
- US-A1- 2014 130 333

## Beschreibung

Die Erfindung betrifft ein Verfahren zum Herstellen eines Verbindungsteils unter Einsatz eines Spritzgießverfahrens, vorzugsweise unter Benutzung eines thermoplastischen Kunststoffmaterials. Spezieller bezieht sich die Erfindung auf die Herstellung eines Verbindungsteils, das an einer Seite ein eine Komponente eines Haftverschlusses bildendes Verschlussteil mit Haft- oder Verhakungselementen aufweist, wobei das Verbindungsteil Teil eines Befestigungssystems sein kann, bei dem zur Bildung einer Haftverschlussverbindung mit einem festzulegenden Bauteil an diesem Anbringteile vorgesehen sind, die Haft- oder Verhakungselemente aufweisen, die mit den korrespondierenden Haft- oder Verhakungselementen des jeweiligen Verbindungsteils in wieder lösbaren Eingriff bringbar sind. Außerdem bezieht sich die Erfindung auf ein Werkzeug zum Herstellen eines derartigen Verbindungsteils.

Für ein wieder lösbares Befestigen von Gegenständen oder Bauteilen kommen Haftverschlussverbindungen auf vielen Gebieten zum Einsatz. Häufig werden bei Kraftfahrzeugen Bodenmatten am Fahrzeugboden gegen Verrutschen oder Abheben in der Weise gesichert, dass am Fahrzeugboden verankerte Verbindungsteile, die Haft- oder Verhakungselemente aufweisen, mit Anbringteilen, die an der Bodenmatte befestigt sind und korrespondierende Haft- oder Verhakungselemente aufweisen, in Haftkontakt oder Verhakungseingriff kommen. Diesbezüglich ist es Stand der Technik, die Verbindungsteile mit einem am Fahrzeugboden verankerbaren, tellerartigen Grundkörper auszubilden und an dessen Oberseite ein die Haft- oder Verhakungselemente aufweisendes Haftverschlussteil anzubringen. Dies geschieht mittels chemischer oder thermischer Klebeverbindungen, beispielsweise mit lösungsmittelhaltigen Klebstoffen oder Heißkleber. Abgesehen von der Umweltbelastung durch lösungsmittelhaltige Substanzen sind weder die chemischen noch die thermischen Klebeverbindungen zufriedenstellend. Wie sich gezeigt hat, besteht bei einem Einsatz bei Kraftfahrzeugbodenmatten die Gefahr, dass sich das Haftverschlussteil und der Grundkörper voneinander lösen, wenn die Temperatur und/oder die relative Luftfeuchtigkeit im Fahrzeug zu hoch sind. Eine Gefahr der Ablösung besteht auch, wenn die Bodenmatte lange in Gebrauch war. Dies bildet ein Sicherheitsrisiko, insbesondere wenn die Bodenmatte während einer Fahrt auf der Fahrerseite nach vorn in Richtung auf die Pedale verrutscht, was zu einer Verunsicherung des Fahrers und gegebenenfalls zu einem Unfallgeschehen führen kann.

Um die Gefahr des Ablösens des Haftverschlussteils vom Grundkörper zu vermeiden, ist es gemäß einer in DE 10 2009 054 896 A1 offenbarten Lösung auch Stand der Technik, das Verbindungsteil derart herzustellen, dass in einem einzigen Prozessschritt in einer Spritzgießform gleichzeitig der Grundkörper und Haken als Haftverschlusselemente geformt werden. Zwar ist bei diesem Vorgehen praktisch keine Gefahr des Ablösens gegeben, jedoch ist die Anzahl der Haken, die sich in der den Grundkörper bildenden Spritzgießform ausbilden lassen, äußerst begrenzt, beispielsweise auf eine Anzahl von höchstens 50 Haken pro cm². Eine derart geringe, erreichbare Packungsdichte der Verhakungselemente ist nicht zufriedenstellend.

Ausgehend von diesem Stand der Technik stellt sich die Erfindung die Aufgabe, ein Verfahren zur Verfügung zu stellen, das die Herstellung eines Verbindungsteils mit einem Haftverschlussteil ermöglicht, das mit dem Grundkörper ablösesicher verbunden ist und sich gleichzeitig durch eine hohe Packungsdichte der Haft- oder Verhakungselemente auszeichnet.

Weitere Verfahren zum Herstellen eines Verbindungsteils gehen aus der DE 10 2011 104 886 A1, der US 4 842 916, der US 2005/0189811 A1, der EP 1 481 603 A1, der EP 0 465 983 A1, der US 2008/0169388 A1, der EP 0 246 221 A2, der JP H05-211910 A, der WO 2009/103260 A2, der WO 92/ 13119 A1, der DE 91 12 527 U, der US 2002/0112324 A1, der US 5 058 245 und der US 2014/0130333 A1 hervor.

Erfindungsgemäß ist diese Aufgabe durch ein Verfahren gelöst, das die Merkmale des Patentanspruchs 1 in seiner Gesamtheit aufweist.

Eine wesentliche Besonderheit der Erfindung besteht demgemäß darin, dass in einem ersten Schritt ein eine Komponente eines Haftverschlusses bildendes Verschlussteil mit Haft- oder Verhakungselementen zumindest teilweise aus mindestens einem Kunststoffmaterial hergestellt und als Einlegeteil in eine Spritzgießform eingebracht wird, in der in einem zweiten Schritt mittels eines Hinterspritzvorganges mindestens ein weiteres Kunststoffmaterial in die Spritzgießform unter einem vorgebbaren Druck und einer vorgebbaren Temperatur unter Bildung eines Grundkörpers derart eingebracht wird, dass das jeweils weitere Kunststoffmaterial zumindest teilweise mit dem mindestens einen Kunststoffmaterial des Verschlussteiles eine gemeinsame Schmelze ausbildet, nach deren Erkalten das Verschlussteil mit dem Grundkörper stoffschlüssig verbunden das Verbindungsteil als einstückiges Gesamtbauteil ausbildet. Dadurch eröffnet sich die Möglichkeit, als Einlegeteil ein Verschlussteil zu benutzen, das in einem gesonderten Herstellprozess gefertigt ist, der auf Verschlussteile moderner Haftverschlüsse ausgerichtet ist, bei denen Haft- oder Verhakungselemente unterschiedlicher Arten, also außer Haken auch Schlaufen oder pilzartige Elemente mit runden oder flachen Köpfen vorgesehen sind, wie sie sich mit sehr hohen Packungsdichten mit dem hierfür vorgesehenen, speziellen Verfahren herstellen lassen. Dadurch, dass in einem zweiten Schritt bei in die Spritzgießform eingebrachtem Einlegeteil mittels eines Hinterspritzvorganges das Verbindungsteil in einem gesonderten Schritt geformt wird, bei dem das Einlegeteil hinterspritzt wird, wird das Verbindungsteil durch beim Hinterspritzvorgang erzeugte stoffschlüssige Verbindung zu einem mit dem Verschlussteil einstückigen Bauteil, von dem das Verschlussteil nicht ablösbar ist.

Das das Einlegeteil bildende Verschlussteil wird vorzugsweise aus Kunststoff mit einem flächigen Trägerteil hergestellt, an dessen einer Seite die mit dem Trägerteil einstückigen Haft- oder Verhakungselemente vorstehen.

Vorzugsweise ferner vorgesehen, dass das Trägerteil auf seiner dem Grundkörper zugewandten Seite frei von Verankerungselementen, wie pilz-, haken- oder schlaufenförmigen Elementen gehalten ist, um entlang größerer Bereiche eine eben verlaufende, flächige Schmelzverbindung zwischen den Kunststoffmaterialen von Verschlussteil und Grundkörper in der Spritzgießform herzustellen.

In besonders vorteilhafter Weise kann ein Einlegeteil benutzt werden, dessen Haft- oder Verhakungselemente mittels eines Formwerkzeuges aus dem thermoplastischen Kunststoff des Trägerteils, beispielsweise aus Polyamid 6, Polyamid 6.6, Polyamid 12, gebildet sind.

Auch kann ein Einlegeteil mit einem Trägerteil benutzt werden, das aus einem Gewebe aus einem Kunststoffmaterial, wie Polyamid 6, Polyamid 6.6, Polyphenylsulfon, besteht, wobei Haft- oder Verschlusselemente aus Filamenten des Gewebes gebildet sind.

Ferner kann ein Einlegeteil mit einem Trägerteil benutzt werden, das aus einem Kunststoffmaterial, wie Polyamid 6, Polyphenylsulfon, Polypropylen, gebildeten Gewirke besteht, wobei Haft- oder Verhakungselemente aus Filamenten des Gewirkes gebildet sind.

Mit besonderem Vorteil kann als Kunststoffmaterial für den Hinterspritzvorgang ein Polyamid oder Polypropylen, vorzugsweise mit Glasfaserverstärkung, benutzt werden.

Auch kann für den Hinterspritzvorgang das gleiche Kunststoffmaterial wie für die Herstellung des Einlegeteils benutzt werden. Für das Herstellen einer guten Schmelzanbindung ist es vorteilhaft, wenn die Verbindungspartner gleiche oder zumindest ähnliche Erweichungs- und Schmelztemperaturen haben.

In besonders vorteilhafter Weise kann die von den Haft- oder Verhakungselementen freie Seite des Trägerteils des Einlegeteils vor dem Einbringen in die Spritzgießform mit einer Beschichtung aus einem als Reaktionsvermittler beim Hinterspritzvorgang wirkenden Polyurethan versehen werden. Ein solches Additiv begünstigt die Bildung einer stoffschlüssigen Verbindung beim Hinterspritzen. Als Reaktionsvermittler oder Klebstoff zum Herstellen der Verbindung kann auch ein lösungsmittelfreier, feuchtigkeitsvernetzender Schmelzklebstoff auf Basis von reaktiven Polyurethanprepolymeren dienen, enthaltend mindestens ein Polyesterpolyol in einer Konzentration zwischen 10 und 90 %, gegebenenfalls Polyetherpolyol in einer Konzentration von 0 bis 50 % sowie mindestens Polyisocyanat in einer Gewichtskonzentration zwischen 5 und 35 %.

Bei dem bei der Erfindung vorgesehenen Hinterspritzvorgang handelt es sich um eine Technik, wie sie beispielsweise in der Fachveröffentlichung "Spritzgießwerkzeuge kompakt" von Harry Pruner und Wolfgang Nesch auf Seite 118 anhand eines Beispiels beschrieben wird, bei dem ein Dekormaterial mit einem Kunststoffteil verbunden wird, wobei die stoffschlüssige Verbindung durch das Einbringen thermoplastischer Schmelze in das Dekormaterial gebildet wird.

Gemäß dem Patentanspruch 10 ist Gegenstand der Erfindung auch ein nach dem Verfahren nach einem der Ansprüche 1 bis 9 hergestelltes Verbindungsteil mit einem Grundkörper, vorzugsweise in Form eines flachen Tellers, der an einer Seite ein Verschlussteil mit Haft- oder Verhakungselementen und an der von den Haft- oder Verhakungselementen freien Seite vorzugsweise eine Verankerungs- oder sonstige Festlegeeinrichtung zum Festlegen des Tellers an einer Struktur aufweist. Der Grundkörper kann auch aus einem sonstigen Trägerteil, insbesondere in Plattenform, bestehen oder Bestandteil eines baulich größeren Systems sein, beispielsweise in Form von Fahrzeugteilen, wie Karosseriekomponenten. Als Festlegeeinrichtung kann auch eine Klebstoffschicht oder ein weiteres Haft- oder Verschlussteil dienen, wie es auf der Oberseite des Grundkörpers eingesetzt ist.

In bevorzugter Ausführungsform ist der Teller kreisrund, wobei die Verankerungseinrichtung einen mit dem Grundkörper einstückigen, von dessen Zentralbereich vorspringenden Verankerungszapfen aufweist, der für den Halteeingriff in eine Öffnung der Struktur vorgesehen ist.

Am Verankerungszapfen kann zumindest ein seitlich vorstehendes Halteelement vorgesehen sein, wobei vorzugsweise Halteelemente in Form zueinander diametral vorstehender Knebel oder spiralige, ein Außengewinde bildende Rippen vorgesehen sein können.

Gemäß dem Patentanspruch 14 ist Gegenstand der Erfindung auch ein Werkzeug zum Herstellen eines Verbindungsteils gemäß einem der Ansprüche 10 bis 13 mittels des Verfahrens nach einem der Ansprüche 1 bis 9, wobei das Werkzeug eine Spritzgießform aufweist, die für einen Hinterspritzvorgang ein erstes Werkzeugteil mit einem ersten Formhohlraum, der zumindest einen Großteil des Grundkörpers formt, sowie ein zweites Werkzeugteil aufweist, das beim Hinterspritzvorgang den ersten Formhohlraum unter Bildung eines zweiten Formhohlraums schließt, in den das das Verschlussteil bildende Einlegeteil einbringbar ist.

Vorzugsweise weist der zweite Formhohlraum eine Einrichtung zum Positionieren und Halten des eingebrachten Einlegeteils auf.

Dabei kann die Anordnung mit besonderem Vorteil so getroffen sein, dass der zweite Formhohlraum eine Anlagefläche aufweist, an der das Einlegeteil mit der die Haft- oder Verhakungselemente aufweisenden Seite anlegbar ist, wobei die Einrichtung zum Positionieren und Halten ein im Zentralbereich aus der Anlagefläche vorspringendes Formteil aufweist, das in eine im Einlegeteil passend gebildete Aussparung eingreift und dadurch das Einlegeteil in ausgerichteter Lage sichert.

Dieses Formteil kann die Form einer im Umriss an die Aussparung des Einlegeteils angepassten rechteckigen Rippe aufweisen, die eine Erhebung in Form eines Höckers aufweist, der beim Hinterspritzvorgang eine Mulde im Grundkörper ausformt. Eine so gebildete Mulde kann durch Eingriff eines Drehwerkzeugs die Anbringung des Verbindungsteils an einer Struktur durch Verdrehen des Verbindungsteils erleichtern.

Bei besonders vorteilhaften Ausführungsbeispielen ist vorgesehen, dass die Anlagefläche des zweiten Formhohlraums ganzflächig mit einer Mikrokonturierung mit einem Muster aus feinen Vertiefungen und Erhebungen versehen ist. Eine derartige Strukturierung begünstigt in Anpassung an die Mikrostruktur der Haft- oder Verhakungselemente deren Anlage an der Formwandung.

Gemäß dem Patentanspruch 19 ist Gegenstand der Erfindung auch ein Befestigungssystem zum Festlegen eines Bauteils mittels zumindest eines nach dem Verfahren gemäß der Ansprüche 1 bis 9 hergestellten Verbindungsteils, wobei jedem Verbindungsteil ein mit dem Bauteil verbundenes Anbringteil zugeordnet ist, das Haft- oder Verhakungselemente aufweist, die mit den korrespondierenden Haft- oder Verhakungselementen des Verbindungsteils in wieder lösbaren Eingriff bringbar sind.

Die jeweiligen Anbringteile können in Anpassung an die Form der Verbindungsteile ebenfalls tellerartig gestaltet sein.

Mit besonderem Vorteil können für die Lagesicherung einer Bodenmatte eines Kraftfahrzeugs die jeweiligen Verbindungsteile am Fahrzeugboden verankerbar und die entsprechenden Anbringteile an der Bodenmatte angebracht sein.

Nachstehend ist die Erfindung anhand der Zeichnung im Einzelnen erläutert. Es zeigen:
- Fig. 1: eine perspektivische Schrägansicht eines Teilabschnitts eines Fahrzeugbodens und einer teilweise an den Boden angelegten Matte, versehen mit einem Befestigungssystem mit erfindungsgemäßen Verbindungsteilen;
- Fig. 2: eine Draufsicht eines Ausführungsbeispiels eines erfindungsgemäßen Verbindungsteils;
- Fig. 3: eine Schnittdarstellung entsprechend der Schnittlinie III-III von Fig. 2;
- Fig. 4: in stark vergrößerter perspektivischer Schrägansicht einen Teilquerschnitt des Ausführungsbeispiels des Verbindungsteils mit gleicher Schnittebene wie in Fig. 3;
- Fig. 5: einen vergrößert gezeichneten Ausschnitt des in Fig. 3 mit V bezeichneten Bereichs, wobei Verhakungselemente des zugehörigen Verschlussteils stark schematisch vereinfacht und nicht maßstäblich dargestellt sind;
- Fig. 6 bis 8: der Fig. 5 entsprechende Teilschnitte mit jeweils unterschiedlichen Haft- oder Verhakungselementen des Verschlussteils;
- Fig. 9: eine perspektivische Schrägansicht eines ersten Werkzeugteils einer Spritzgießform zur Herstellung eines erfindungsgemäßen Verbindungsteils;
- Fig. 10: eine perspektivische Schrägansicht des zweiten Werkzeugteils der Spritzgießform;
- Fig. 10a: eine vergrößerte Darstellung des in Fig. 10 mit X bezeichneten Bereichs;
- Fig. 11: eine gegenüber Fig. 9 in größerem Maßstab gezeichnete Vorderansicht zweier Formteile des ersten Werkzeugteils in auseinander bewegter Position;
- Fig. 12: eine Seitenansicht eines der Formteile von Fig. 11, gesehen von der dem anderen Formteil zugewandten Seite;
- Fig. 13a-13c: skizzenhafte Darstellungen von Arbeitsschritten zur Erzeugung einer Mikrokontur an einer Formwand des zweiten Werkzeugteils der Spritzgießform;
- Fig. 14: in mikroskopischer Vergrößerung und in schematischer, perspektivischer Darstellung einen Ausschnitt, der die Mikrokontur in teilweise fertig gestelltem Zustand verdeutlicht;
- Fig. 15: eine vergrößerte, perspektivische Schrägansicht des Verbindungsteils gemäß dem Ausführungsbeispiel von Fig. 4, gesehen auf die Oberseite;
- Fig. 16: eine vergrößerte, perspektivische Schrägansicht eines Ausführungsbeispiels des Verbindungsteils mit einem Haken aufweisenden Verschlussteil;
- Fig. 17: eine weiter vergrößerte, abgebrochen dargestellte Schnittdarstellung des Ausführungsbeispiels von Fig. 16; und
- Fig. 18: eine der Fig. 16 ähnliche perspektivische Schrägansicht mit einem Verschlussteil mit Haftelementen, die an ihrer Oberseite planare Oberflächenteile aufweisen.

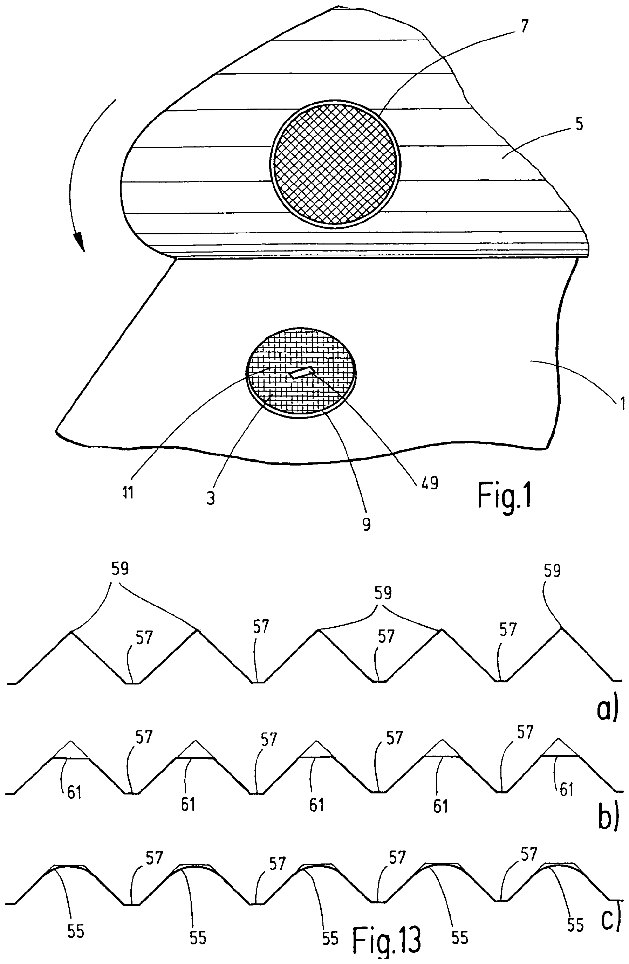

Im Folgenden ist die Erfindung anhand des Beispiels der Herstellung eines Verbindungsteils näher beschrieben, das Teil eines Befestigungssystems für die Festlegung einer Bodenmatte an einem Fahrzeugboden ist. Es versteht sich, dass erfindungsgemäße Verbindungsteile vorteilhaft auch bei anderen Anwendungsgebieten von Haftverschlüssen einsetzbar sind, sei es im Industriebereich, Sport- oder Freizeitbereich und dergleichen. Die Fig. 1 zeigt schematisiert einen Teilbereich eines Fahrzeugbodens 1 mit einem daran verankerten, einem Ausführungsbeispiel der Erfindung entsprechenden Verbindungsteil in Form eines Verbindungstellers 3. Außerdem zeigt Fig. 1 einen Teil einer Bodenmatte 5 in einer Position vor dem Auflegen auf den Boden 1. Bei der Bodenmatte 5 handelt es sich beim gezeigten Beispiel um eine als Zubehörteil auf den Boden 1 auflegbare Gummimatte. Ebenso kann es sich um eine ein Serienteil des Fahrzeugs bildende Matte, beispielsweise in Form einer Textilmatte, handeln. An der Bodenmatte 5 sind als Komponenten eines Haftverschlusses Anbringteile 7 vorgesehen, die wie die Teller 3 am Fahrzeugboden 1 im Umriss kreisrund sind und Haft- und Verhakungselemente, beispielsweise ein Flauschmaterial, aufweisen, um mit den Tellern 3 eine Haftschlussverbindung zu bilden. In Fig. 1 ist von der Anzahl in Frage kommender Paare aus Teller 3 und Anbringteil 7 lediglich ein Paar sichtbar.

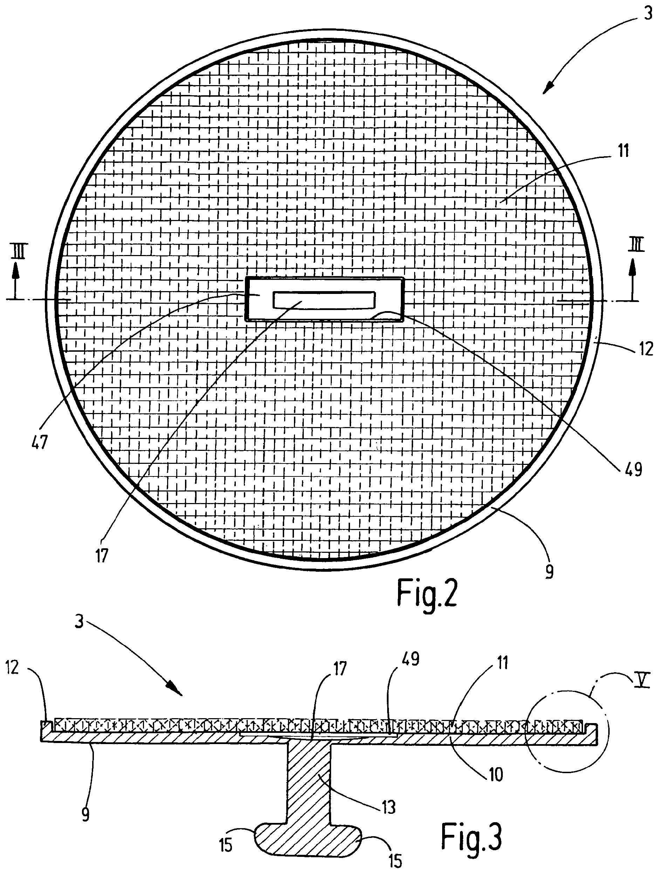

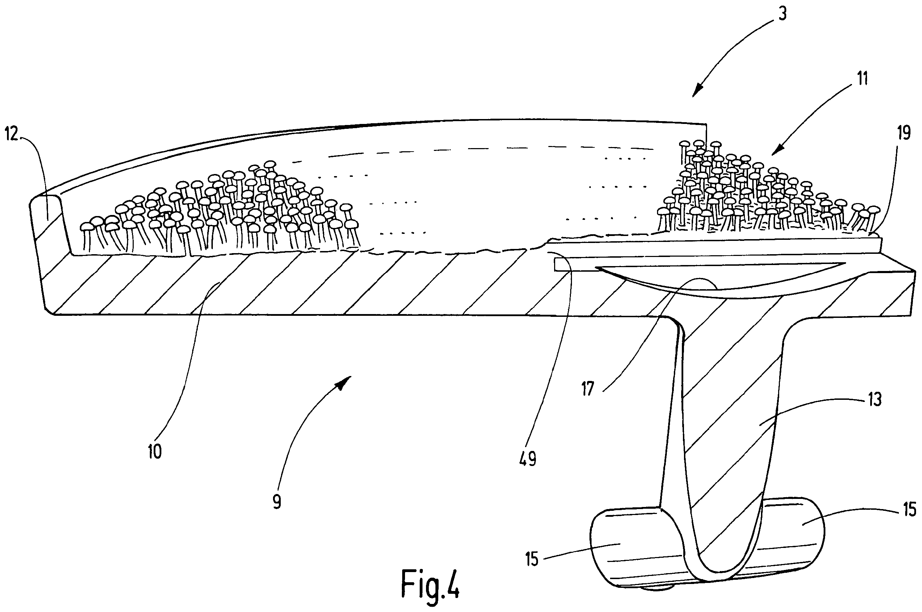

Die Fig. 2 zeigt in gegenüber einer praktischen Ausführungsform etwa doppelter Größe das Ausführungsbeispiel des Verbindungsteils in Form des Tellers 3 mit einem runden Grundkörper 9, der an seiner in Fig. 2 sichtbaren Oberseite ein Verschlussteil 11 mit Haft- oder Verhakungselementen aufweist, die in Fig. 2, ebenso wie bei der Schnittdarstellung von Fig. 3, lediglich schematisiert angedeutet sind. An der vom Verschlussteil 11 abgewandten Unterseite ist im Zentralbereich ein Verankerungszapfen 13 am Grundkörper 9 einstückig angeformt, an dessen freiem Ende zueinander diametrale Verankerungsknebel 15 seitlich vorstehend angeformt sind, siehe auch Fig. 4. Wie am deutlichsten Fig. 2 und 4 zeigen, ist an der Oberseite zentral gelegen in den Grundkörper 9 eine vertiefte Mulde 17 eingeformt. Diese erleichtert das Verdrehen des Tellers 3, wenn dieser am Boden 1 verankert wird, wobei der Zapfen 13 durch eine Schlitzöffnung des Bodens 1 hindurchgesteckt und dann verdreht wird. Das Verschlussteil 11 ist als Einlegeteil für den Spritzgießvorgang vorgefertigt, beispielsweise durch Ausstanzen runder Abschnitte aus einer Bahn eines Haftverschlussmaterials. Dadurch, dass das Verschlussteil als Einlegeteil in eine Spritzgießform eingebracht wird und der Gießvorgang bei der Ausformung des Grundkörpers 9 in Hinterspritztechnik durchgeführt wird, bildet das Verschlussteil 11 bei dem in Fig. 2 bis 4 gezeigten Fertigzustand ein einstückiges, integrales Bestandteil des Tellers 3. Wie insbesondere die Fig. 2 und 4 zeigen, besteht der Grundkörper 9 aus einer tellerförmigen Basisplatte 10, die außenumfangsseitig in einen hochgezogenen Außenrand 12 übergeht. Bei einer praktischen Ausführungsform hat die Basisplatte 10 einen Durchmesser von 60 mm. Bei der Ausführungsform nach der Fig. 4 ist die Höhe des Außenrandes 12 größer als die Höhe der einzelnen am Tellergrund sich anschließenden Haft- oder Verhakungselemente des Verschlussteils 11. Hierdurch lassen sich die Haft- oder Verhakungselemente sowohl von oben her als auch von der Seite vor Beschädigungen schützen und sind von der Stirnseite des Tellers 3 her gesehen, für den Ein- oder Angriff eines korrespondierenden Verschlussmaterials, beispielsweise in Form von Schlaufenmaterial vollständig zugänglich, das sich am jeweiligen Anbringteil 7 an der Bodenmatte 5 befindet.

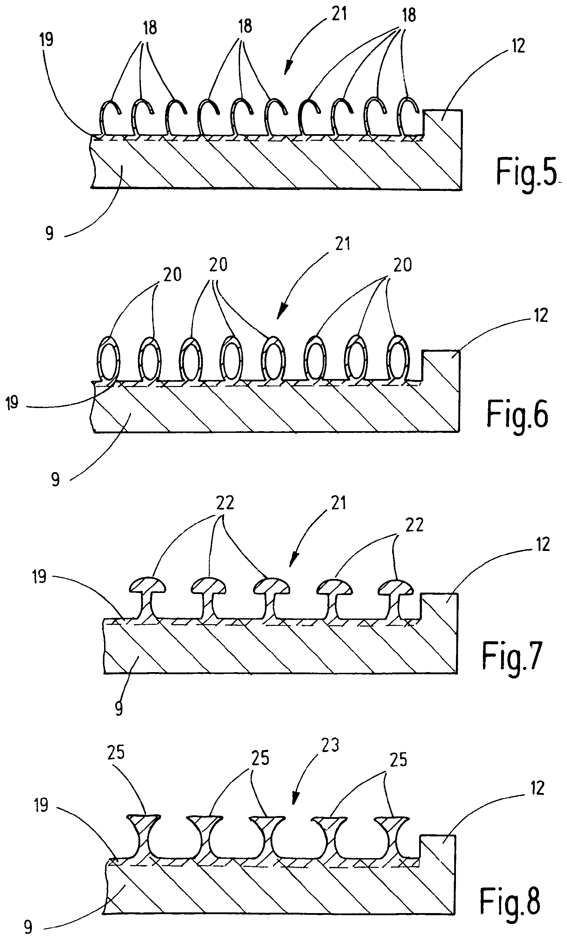

Die Fig. 5 bis 8 verdeutlichen in stark schematisch vereinfachter und vergrößerter Darstellung des in Fig. 3 mit V bezeichneten Bereichs mehrere Varianten der Gestaltung des Verschlussteils 11 mit unterschiedlichen Arten von an einem Trägerteil 19 befindlichen Verhakungselementen 21 (Fig. 5 bis 7) oder Haftelementen 23 (Fig. 8). So zeigt Fig. 8 Haftelemente 23, die durch planare Oberflächen 25 an den gegenüber den Stängeln erweiterten Kopfteilen mittels Van-der-Waals-Kräfte eine Adhäsionsverhaftung an glatten Gegenflächen ermöglichen, jedoch auch eine Verhakung mit korrespondierenden Elementen gleicher Art oder in Pilzkopfform. Bei Einsatz von Haftelementen 23 mit Adhäsionsverhalten ist es jedoch vorteilhaft, die dahingehenden Haftelemente 23 mit ihren vorspringenden planaren Kopfoberflächen 25 über den Tellerrand 12 um eine vorgebbare Strecke überstehen zu lassen, damit diese mit entsprechendem Folienmaterial verhaftet werden können, das Bestandteil der auf den Teller 3 aufzulegenden Boden-Fußmatte 5 sein kann. Die Fig. 5 bis 7 verdeutlichen Haken 18 bzw. Schlaufen 20 bzw. Pilzköpfe 22 für den Verhakungseingriff mit korrespondierenden Elementen. Die Verhakungselemente 21 lassen sich nach im Stand der Technik bekannten Verfahren, wie es unter anderem beispielsweise aus DE 10 2008 007 913 A1 entnehmbar ist, an einem Trägerteil 19 in Form eines Kunststoffgewebes oder Kunststoffgewirkes herstellen, das vorstehende Filamente, beispielsweise in Form von Polfäden eines Gewebes, aufweist. Durch das Auftrennen von Schlaufen 20, wie sie in Fig. 6 als Verhakungselemente 21 vorgesehen sind, lassen sich die in Fig. 5 gezeigten Haken 18 realisieren. Pilzköpfe 22, wie sie in Fig. 7 gezeigt sind, lassen sich erhalten, wenn Polfäden, die an ihrem oberen Bogen jeweils aufgetrennt sind, entsprechend erwärmt werden, so dass sie sich zu Pilzköpfen verformen. Haftelemente 23, die mit ihren planaren Oberflächen eine Adhäsionsverbindung ermöglichen, jedoch auch durch die gegenüber den Stängeln verbreiterten Köpfe eine Verhakung ermöglichen, lassen sich durch Formverfahren wie in DE 198 28 856 C1 beschrieben, herstellen, wobei unter anderem Kunststoffe wie Polyamid 6, Polyamid 6.6, Polyamid 12 vorteilhaft einsetzbar sind. Für Trägerteile 19 in Form eines Kunststoffgewebes kommt unter anderem mit Vorteil Polyamid 6, Polyamid 6.6, Polyphenylsulfon in Betracht. Für Trägerteile in Form eines Kunststoffgewirkes sind Polyamid 6, Polyphenylsulfon, Polypropylen besonders geeignet.

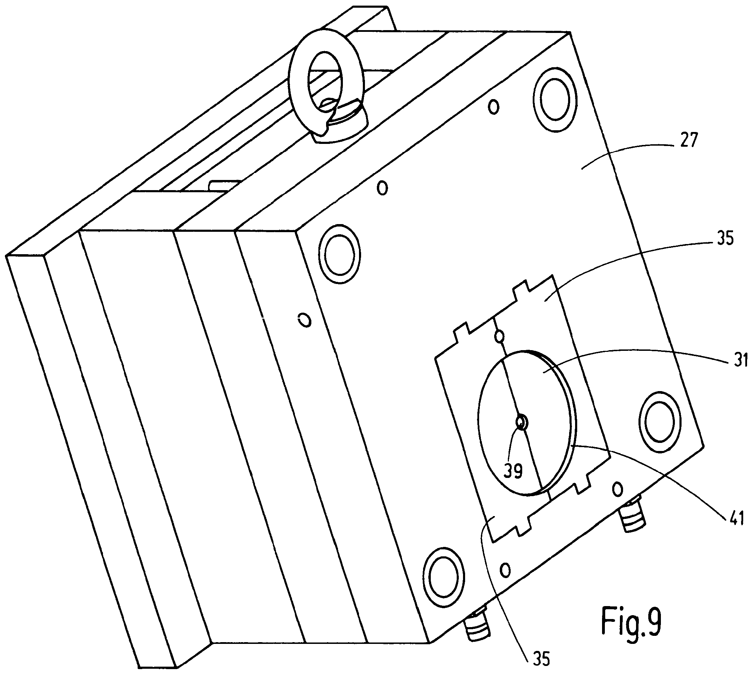

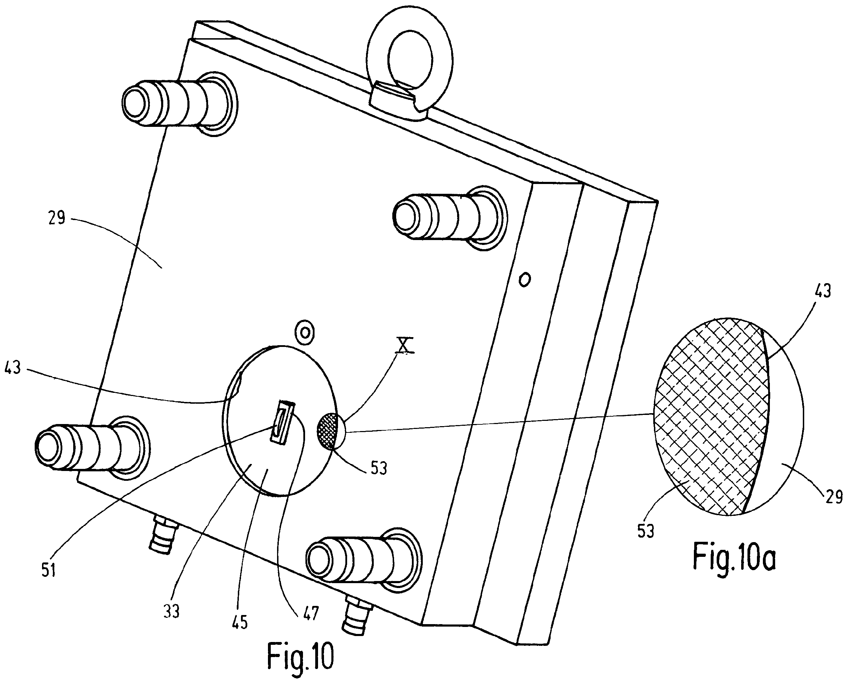

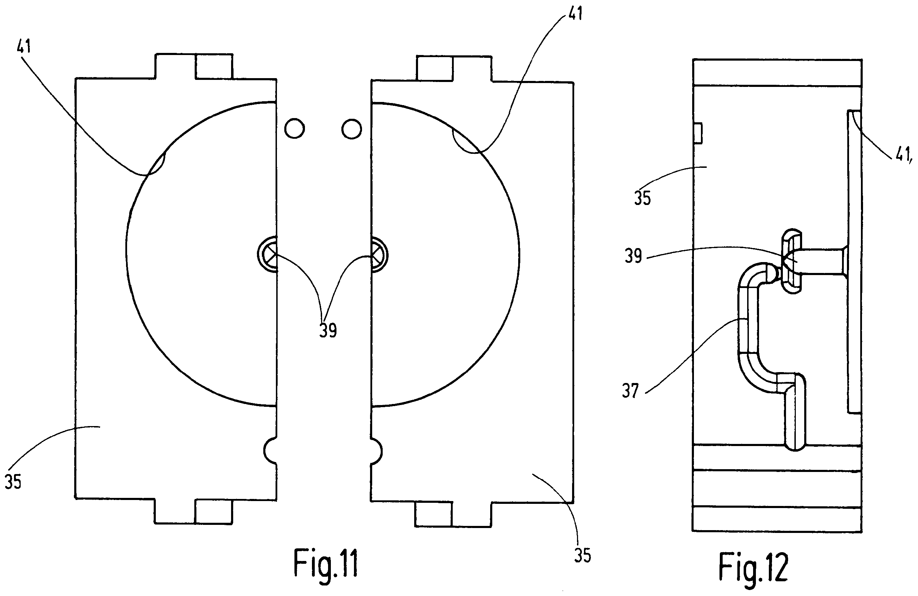

Die Fig. 9 bis 12 zeigen wesentliche Komponenten eines Spritzgießwerkzeugs zum Herstellen des als Verbindungsteil vorgesehenen Tellers 3 unter Anwendung der Hinterspritztechnik, wobei der Grundkörper 9 aus einem thermoplastischen Kunststoff wie Polyamid oder Polypropylen, vorzugsweise mit Glasfaserverstärkung, gebildet wird. Die Fig. 9 und 10 zeigen ein erstes Werkzeugteil 27 bzw. ein zweites Werkzeugteil 29, die aneinander anlegbar sind, um die an ihnen ausgebildeten Formhohlräume zu verschließen. Von diesen sind ein erster Formhohlraum 31 am ersten Werkzeugteil 27 und ein zweiter Formhohlraum 33 am zweiten Werkzeugteil 29 vorgesehen. Der erste Formhohlraum 31 ist durch bewegliche, gleich ausgebildete Formteile 35 begrenzt, die bewegbar und in Fig. 11 in einer auseinander gefahrenen Stellung dargestellt sind. In der in Fig. 9 gezeigten geschlossenen Stellung bilden die Formteile 35 jeweils eine Formhälfte zur Bildung der runden Tellerform des Grundkörpers 9. Von Heißkanälen für die Zufuhr des Gießmaterials ist lediglich in Fig. 12 ein Kanal 37 sichtbar, der in die den Knebel 15 am Verankerungszapfen 13 ausbildende Formvertiefung 39 des gezeigten Formteils 35 einmündet. Die Höhe des den ersten Formhohlraum 31 begrenzenden Randes 41 ist derart gewählt, dass in Verbindung mit dem zweiten Formhohlraum 33 des zweiten Werkzeugteils 29 die gewünschte Dicke des oberhalb des Verankerungszapfens 13 gebildeten Grundkörpers 9, d.h. die gewünschte Dicke des Tellers 3, gebildet wird.

Das vorgefertigte, aus Trägerteil 19 mit Verschlussteil 11 bestehende Einlegeteil ist für den Spritzvorgang in den am zweiten Werkzeugteil 29 ausgebildeten zweiten Formhohlraum 33 einbringbar. Dieser weist eine von einem Rand 43 umgebene, vertiefte, ebene Anlagefläche 45 auf, an die das Einlegeteil mit der Seite des die Haft- oder Verhakungselemente 23, 21 aufweisenden Verschlussteils 11 anlegbar ist. Um das angelegte Einlegeteil vor dem Schließen der Spritzgießform in ausgerichteter Position zu sichern, ist im Zentralbereich der Anlagefläche 45 eine aus deren Ebene vorspringende Rippe 47 vorgesehen. Diese hat die Form eines rechteckigen Quaders mit einem Umriss, der der Größe einer im Trägerteil 19 gebildeten Aussparung 49 angepasst ist, so dass das Einlegeteil durch passenden Eingriff der Rippe 47 gesichert ist. In Längsrichtung der Rippe 47 erstreckt sich in deren Zentralbereich ein vorstehender, gewölbter Höcker 51, der bei dem Hinterspritzvorgang die Mulde 17 im Grundkörper 9 ausformt.

In stark vergrößerter Darstellung zeigt die Fig. 10a in Verbindung mit dem in Fig. 10 mit X bezeichneten Bereich eine abgewandelte Formgestaltung der Oberfläche der Anlagefläche 45 des zweiten Formhohlraums 33. Abweichend von einer vollständig glatten Oberfläche der Anlagefläche 45 ist bei dieser Variante eine Mikrokonturierung 53 der Oberfläche vorgesehen, durch die sich für die anliegenden Haft- oder Verhakungselemente 23, 21 des Verschlussteils 11 des Einlegeteils eine für den Hinterspritzvorgang optimale Anlage ergibt. Die Mikrokonturierung 53 kann durch ein Muster aus feinen Rillen 57 und Erhebungen 55 gebildet sein, s. Fig. 13. Diese Figur verdeutlicht skizzenhaft eine vorteilhafte Vorgehensweise zur Erzeugung der Erhebungen 55 und Rillen 57. Wie in Fig. 13 bei a) dargestellt, lassen sich durch Rändeln Spitzen 59 zwischen den Vertiefungen 57 ausbilden. Wie bei b) in Fig. 13 gezeigt, sind durch Abschleifen der Spitzen 59 ebene Flächenteile 61 zwischen den Rillen 57 ausbildbar. Wie c) von Fig. 13 zeigt, lassen sich die ebenen Oberflächenteile 61 durch Bürsten derart abrunden, dass die gezeigten abgerundeten Erhebungen 55 entstehen, die in Verbindung mit den Rillen 57 eine optimale Mikrokontur für die Anlagefläche 45 bilden.

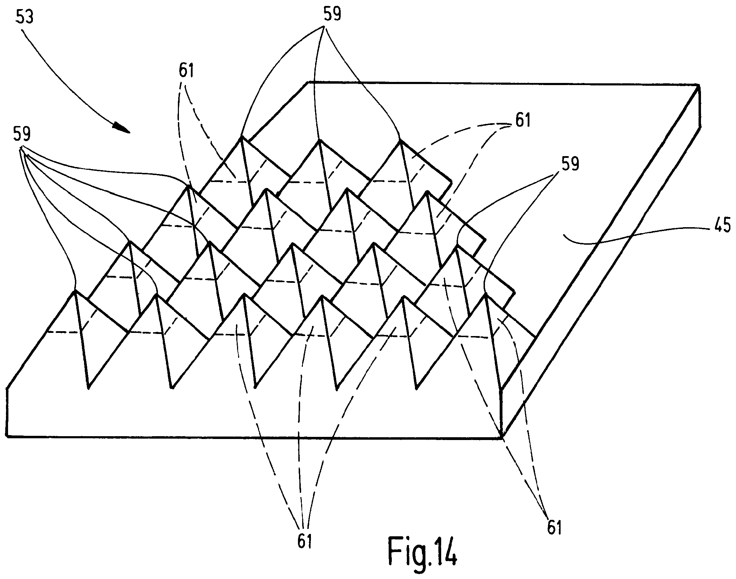

In Fig. 14, die einen Ausschnitt aus der Konturierung 53 in einem Zustand vor der vollständigen Fertigstellung zeigt, sind von den durch Rändelung gebildeten Spitzen 59 und den durch Schleifen gebildeten Oberflächenteilen 61 nicht sämtliche beziffert. Wie gezeigt, sind zwischen den von den Flächen 61 begrenzten Kegelstümpfen, die zu ihrem freien Ende hin noch abgerundet werden, um die Erhebungen 55 gemäß Fig. 13c) zu bilden, Räume gebildet. Diese dienen der Aufnahme der Haft- oder Verhakungselemente 23, 21 des Verschlussteils 11 des Einlegeteils, damit diese beim Hinterspritzen in der Form nicht ungewollt zusammengedrückt werden. Der nach dem Hinterspritzvorgang fertige, als Verbindungsteil dienende Teller 3 ermöglicht daher eine sichere Festlegung des jeweils zu sichernden Bauteils wie der Bodenmatte 5.

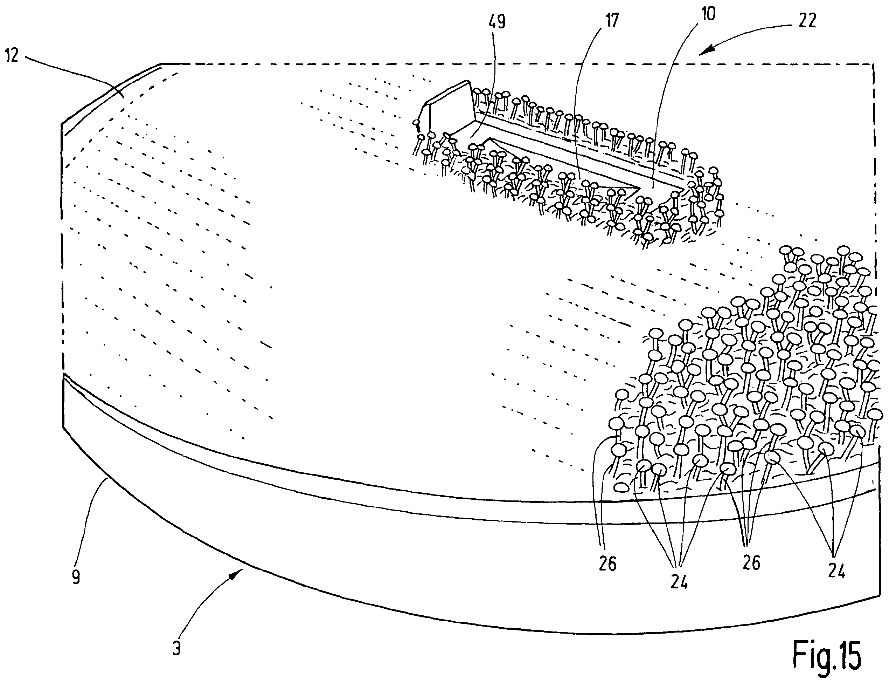

Die Fig. 15 zeigt einen Teil der Oberseite des Tellers 3 eines Ausführungsbeispiels, bei dem in Entsprechung zu Fig. 4 Verhakungselemente in Form von Pilzköpfen 22 vorgesehen sind. Wie auch aus Fig. 4 entnehmbar, hat der umfängliche Außenrand 12 einen Überstand über die Ebene der Oberseite der Pilzköpfe 22. Bei der Anlage an dem festzulegenden Bauteil, wie der Bodenmatte 5, wobei die Pilzköpfe 22 beispielsweise mit einem Flauschmaterial an Anbringteilen 7 der Bodenmatte 5 verhakbar sind, bildet der umfängliche Rand 12 eine Art Dichtungsrand, der verhindert, dass Schmutzpartikel, wie sie im Bodenbereich von Fahrzeugen auftreten können, ungehindert zum Verschlussbereich gelangen. Wie aus der in Fig. 15 gezeigten Mikroaufnahme deutlich entnehmbar ist, sind die Pilzköpfe 22 derart gestaltet, dass der Durchmesser der halbkugelartig gerundeten Kopfteile 24 (in Fig. 15 lediglich einige beziffert) etwa den doppelten Durchmesser der runden Stängel 26 (lediglich einige beziffert) besitzen, wobei die Stängel 26 etwa die vierfache Länge der Kopfteile 24 besitzen.

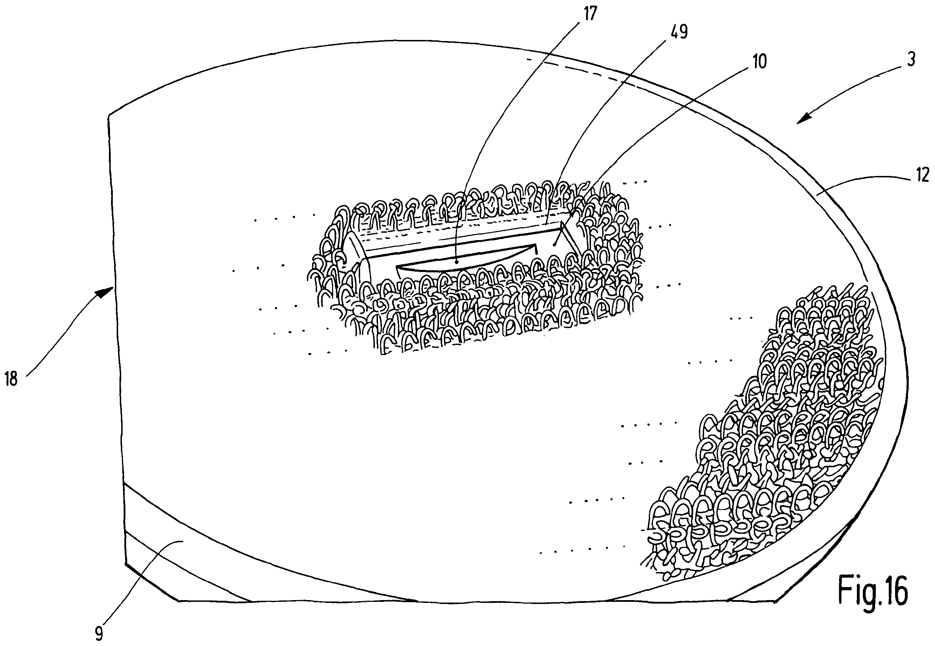

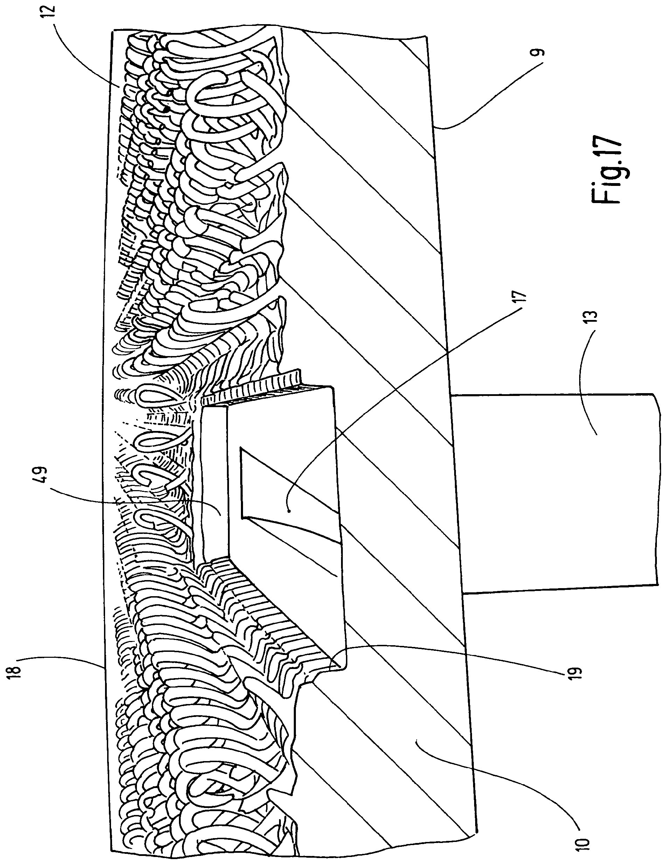

Die Fig. 16 zeigt in ähnlicher Weise in Form einer Mikrophotographischen Darstellung ein Ausführungsbeispiel des Tellers 3, bei dem als Verhakungselemente Haken 18 entsprechend der Fig. 5 vorgesehen sind. Wie bei Fig. 4 und 15 besitzt der umfängliche Außenrand 12 über die Ebene der Oberseite der Haken 18 hinaus einen Überstand. Wie die weiter vergrößerte Darstellung dieses Beispiels in Fig. 17 zeigt, ist durch den Hinterspritzvorgang das Trägerteil 19, an dem sich die Haken 18 befinden, zu einem integralen Bestandteil der Platte 10 des Grundkörpers 9 geworden. Entsprechendes gilt bei dem Ausführungsbeispiel von Fig. 4 und 15 für das die Pilzköpfe 22 aufweisende Trägerteil 19.

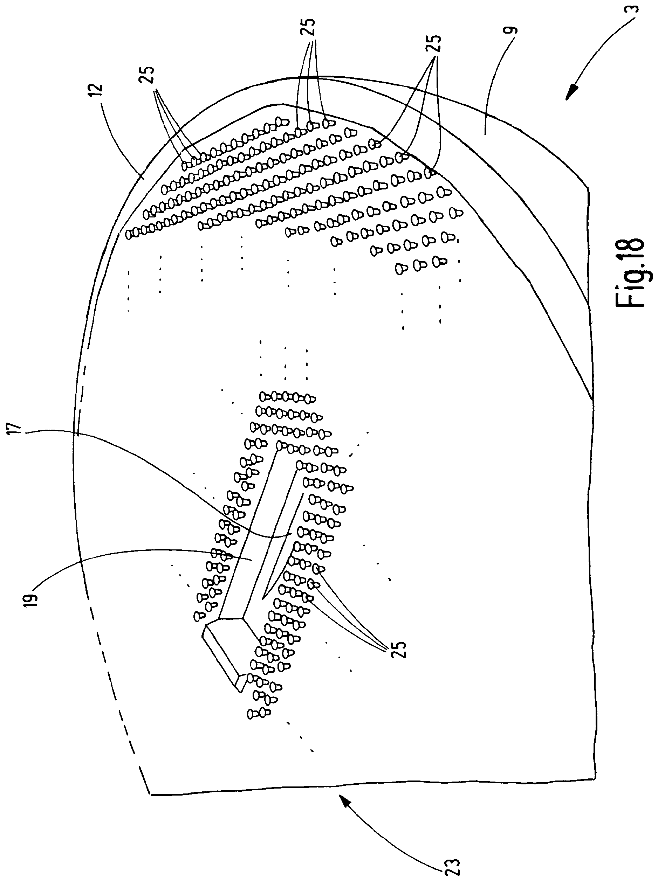

In ähnlicher Darstellung zeigt die Fig. 18 ein Ausführungsbeispiel mit Haftelementen 23, die am oberen Ende keine runden Pilzköpfe 22, sondern ebene Oberflächenteile 25 aufweisen, siehe Fig. 8, in der diese Form der Haftelemente 23 verdeutlicht ist. Da diese Haftelemente 23 sowohl für einen Verhakungseingriff mit entsprechenden, korrespondierend ausgebildeten Haftverschlusselementen in Frage kommen, sondern auch einen Adhäsionsverschluss (sog. Gekkoverschluss) mit glatten Anlageflächen bilden können, ist bei diese Ausführungsbeispiel der Außenrand 12 des ansonsten gleichartig ausgebildeten Tellers 3 nicht oder nur geringfügig über die Oberflächenteile 25 der Haftelemente 23 überstehend ausgebildet. Im Übrigen entspricht die Gestalt des Tellers 3 den anderen Ausführungsbeispielen. Alternativ kann der Teller ohne aus der Ebene der Platte 10 des Grundkörpers 9 vorstehenden Umfangsrand 12 derart gestaltet sein, dass sich das Einlegeteil mit seinem Trägerteil 19 bis an den Außenumfang oder bis kurz vor den Außenumfang der Platte 10 erstreckt.

## Patentansprüche

1. Verfahren zum Herstellen eines Verbindungsteils (3) unter Einsatz eines Spritzgießverfahrens, wobei in einem ersten Schritt ein eine Komponente eines Haftverschlusses bildendes Verschlussteil (11) mit Haft- oder Verhakungselementen (21, 23) zumindest teilweise aus mindestens einem Kunststoffmaterial hergestellt und als Einlegeteil in eine Spritzgießform (27, 29) eingebracht wird, in der in einem zweiten Schritt mittels eines Hinterspritzvorganges mindestens ein weiteres Kunststoffmaterial in die Spritzgießform (27, 29) unter einem vorgebbaren Druck und einer vorgebbaren Temperatur unter Bildung eines Grundkörpers (9) derart eingebracht wird, dass das jeweils weitere Kunststoffmaterial zumindest teilweise mit dem mindestens einen Kunststoffmaterial des Verschlussteiles (11) eine gemeinsame Schmelze ausbildet, nach deren Erkalten das Verschlussteil (11) mit dem Grundkörper (9) stoffschlüssig verbunden das Verbindungsteil (3) als einstückiges Gesamtbauteil ausbildet.

2. Verfahren nach Anspruch 1, **dadurch gekennzeichnet, dass** das das Einlegeteil bildende Verschlussteil (11) aus Kunststoff mit einem flächigen Trägerteil (19) hergestellt wird, an dessen einer Seite die mit dem Trägerteil (19) einstückigen Haft- oder Verhakungselemente (21, 23) vorstehen.

3. Verfahren nach Anspruch 2, **dadurch gekennzeichnet, dass** das Trägerteil (19) auf seiner dem Grundkörper (9) zugewandten Seite frei von Verankerungselementen, wie pilz-, haken- oder schlaufenförmigen Elementen (18, 20, 22, 25) gehalten ist, um entlang größerer Bereiche eine eben verlaufende, flächige Schmelzverbindung zwischen den Kunststoffmaterialien von Verschlussteil (11) und Grundkörper (9) in der Spritzgießform (27, 29) herzustellen.

4. Verfahren nach einem der Ansprüche 1 bis 3, **dadurch gekennzeichnet, dass** ein Einlegeteil (19, 11) benutzt wird, dessen Haft- oder Verhakungselemente (21, 23) mittels eines Formwerkzeuges aus dem thermoplastischen Kunststoff des Trägerteils (19), wie Polyamid 6, Polyamid 6.6, Polyamid 12, gebildet sind.

5. Verfahren nach einem der vorstehenden Ansprüche, **dadurch gekennzeichnet, dass** ein Einlegeteil (11, 19) mit einem Trägerteil (19) benutzt wird, das aus einem Gewebe aus einem Kunststoffmaterial, wie Polyamid 6, Polyamid 6.6, Polyphenylsulfon, besteht, wobei Verhakungselemente (21) aus Filamenten des Gewebes gebildet sind.

6. Verfahren nach einem der vorstehenden Ansprüche, **dadurch gekennzeichnet, dass** ein Einlegeteil (11, 19) mit einem Trägerteil (19) benutzt wird, das aus einem Gewirke aus einem Kunststoffmaterial wie Polyamid 6, Polyphenylsulfon, Polypropylen, besteht, wobei Verhakungselemente (21) aus Filamenten des Gewirkes gebildet sind.

7. Verfahren nach einem der vorstehenden Ansprüche, **dadurch gekennzeichnet, dass** als jeweils weiteres Kunststoffmaterial für den Hinterspritzvorgang Polyamid oder Polypropylen, vorzugsweise mit Glasfaserverstärkung, benutzt wird, das eine Schmelztemperatur aufweist, die bevorzugt gleich oder im selben Bereich liegt wie das jeweils eingesetzte Kunststoffmaterial für das Verschlussteil (11).

8. Verfahren nach einem der vorstehenden Ansprüche, **dadurch gekennzeichnet, dass** für den Hinterspritzvorgang das gleiche Kunststoffmaterial wie für die Herstellung des Einlegeteils (11, 19) benutzt wird.

9. Verfahren nach einem der vorstehenden Ansprüche, **dadurch gekennzeichnet, dass** die von den Haft- oder Verhakungselementen (21,23) freie Seite des Trägerteils (19) des Einlegeteils (11, 19) vor dem Einbringen in die Spritzgießform (27, 29) mit einer Beschichtung aus einem als Reaktionsvermittler beim Hinterspritzvorgang wirkenden Polyurethan, vorzugsweise feuchtigkeitsvernetzendem Polyurethan, versehen wird.

10. Nach dem Verfahren nach einem der Ansprüche 1 bis 9 hergestelltes Verbindungsteil, mit einem Grundkörper (9), vorzugsweise in Form eines flachen Tellers (3), der an einer Seite ein eine Komponente eines Haftverschlusses bildendes Verschlussteil (11) mit Haft- oder Verhakungselementen (21, 23) und vorzugsweise an der anderen Seite eine Verankerungseinrichtung (13, 15) zum Festlegen des Grundkörpers (9) an einer Struktur (1) aufweist und bei dem die jeweils eingesetzten Kunststoffmaterialien von Verschlussteil (11) und Grundkörper (9) entlang mindestens einer eben verlaufenden Verbindungsfläche intrinsisch miteinander verbunden sind.

11. Verbindungsteil nach Anspruch 10, **dadurch gekennzeichnet, dass** der Teller (3) kreisrund ist und die Verankerungseinrichtung (13, 15) einen mit dem Grundkörper (9) einstückigen, von dessen Zentralbereich vorspringenden Verankerungszapfen (13) aufweist, der für den Halteeingriff in eine Öffnung der Struktur (1) vorgesehen ist.

12. Verbindungsteil nach Anspruch 11, **dadurch gekennzeichnet, dass** am Verankerungszapfen (13) zumindest ein seitlich vorstehendes Halteelement (15) vorgesehen ist.

13. Verbindungsteil nach Anspruch 12, **dadurch gekennzeichnet, dass** Halteelemente in Form zueinander diametral am Verankerungszapfen (13) vorstehender Knebel (15) oder spiraliger, ein Außengewinde des Verankerungszapfens (13) bildender Rippen vorgesehen sind.

14. Werkzeug zum Herstellen eines Verbindungsteils gemäß einem der Ansprüche 10 bis 13 mittels des Verfahrens nach einem der Ansprüche 1 bis 9, mit einer Spritzgießform, die für einen Hinterspritzvorgang ein erstes Werkzeugteil (27) mit einem ersten Formhohlraum (31), der zumindest einen Großteil des Grundkörpers (9) formt, sowie ein zweites Werkzeugteil (29) aufweist, das beim Hinterspritzvorgang den ersten Formhohlraum (31) unter Bildung eines zweiten Formhohlraums (33) schließt, in den das Einlegeteil (11, 19) einbringbar ist, und dass beide Formhohlräume (31, 33) gleich oder im Wesentlichen gleich groß ausgebildet sind.

15. Werkzeug nach Anspruch 14, **dadurch gekennzeichnet, dass** der zweite Formhohlraum (33) eine Einrichtung (47) zum Positionieren und Halten des eingebrachten Einlegeteils (11, 19) aufweist.

16. Werkzeug nach Anspruch 14 oder 15, **dadurch gekennzeichnet, dass** der zweite Formhohlraum (33) eine Anlagefläche (45) aufweist, an der das Einlegeteil (11, 19) mit der die Haft- oder Verhakungselemente (21, 23) aufweisenden Seite anlegbar ist, und dass die Einrichtung zum Positionieren und Halten ein im Zentralbereich aus der Anlagefläche vorspringendes Formteil (47) aufweist, das in eine im Einlegeteil (11, 19) passend ausgebildete Aussparung (49) eingreift.

17. Werkzeug nach einem der Ansprüche 14 bis 16, **dadurch gekennzeichnet, dass** das vorspringende Formteil die Form einer im Umriss an die Aussparung (49) des Einlegeteils (11, 19) angepassten, rechteckigen Rippe (47) aufweist, die eine Erhebung in Form eines Höckers (51) aufweist, der beim Hinterspritzvorgang eine Mulde (17) im Grundkörper (9) ausformt.

18. Werkzeug nach einem der Ansprüche 14 bis 17, **dadurch gekennzeichnet, dass** die Anlagefläche (45) des zweiten Formhohlraums (33) ganzflächig mit einer Mikrokonturierung (53) mit einem Muster aus feinen Vertiefungen (57) und Erhebungen (55) versehen ist.

19. Befestigungssystem zum Festlegen eines Bauteils (5) mittels zumindest eines nach dem Verfahren gemäß einem der Ansprüche 1 bis 9 hergestellten Verbindungsteils (3), wobei jedem Verbindungsteil (3) ein mit dem Bauteil (5) verbundenes Anbringteil (7) zugeordnet ist, das Haft- oder Verhakungselemente aufweist, die mit den korrespondierenden Haft- oder Verhakungselementen (21, 23) des Verbindungsteils (3) in wieder lösbaren Eingriff bringbar sind.

20. Befestigungssystem nach Anspruch 19, **dadurch gekennzeichnet, dass** die jeweiligen Anbringteile (7) in Anpassung an die Form der Verbindungsteile (3) tellerartig gestaltet sind.

21. Befestigungssystem nach Anspruch 19 oder 20, **dadurch gekennzeichnet, dass** für die Lagesicherung einer Bodenmatte (5) eines Kraftfahrzeugs die jeweiligen Verbindungsteile (3) am Fahrzeugboden (1) verankerbar und die Anbringteile (7) an der Bodenmatte (5) angebracht sind.

## Claims

1. Method for manufacturing a connecting element (3) using an injection moulding method, wherein, in a first step, a fastening part (11) with gripping or interlocking elements (21, 23) forming a component of a hook and loop fastener is manufactured at least partially from at least one plastics material and placed in an injection mould (27, 29) as an insert, at least one additional plastics material being placed in said injection mould (27, 29) in a second step using a back moulding process at a pre-definable pressure and a pre-definable temperature to form a main body (9) in such a way that the respective other plastics material at least partially forms a combined molten mass with the at least one plastics material of the fastening part (11), and, after said molten mass has cooled down, the fastening part (11) is connected in a material-uniting manner to the main body (9) to form the connecting element (3) as a complete one-piece component.

2. Method according to claim 1, **characterised in that** the fastening part (11) forming the insert is manufactured from plastics material with a flat supporting element (19), gripping or interlocking elements (21, 23) forming part of the supporting element (19) and protruding on one side of said supporting element.

3. Method according to claim 2, **characterised in that** the supporting element (19) is kept free from anchoring elements such as mushroom, hook or loop-shaped elements (18, 20, 22, 25) on its side facing the main body (9) to create a level, flat fused connection between the plastics materials of the fastening part (11) and the main body (9) along larger regions in the injection mould (27, 29).

4. Method according to any one of claims 1 to 3, **characterised in that** an insert (19, 11) is used with gripping or interlocking elements (21, 23) that are formed by a moulding tool from the thermoplastic plastics material of the supporting element (19), such as polyamide 6, polyamide 6.6 or polyamide 12.

5. Method according to any one of the preceding claims, **characterised in that** an insert (11, 19) is used with a supporting element (19) consisting of a woven fabric made from a plastics material such as polyamide 6, polyamide 6.6 or polyphenylsulfone, interlocking elements (21) being formed from filaments of the woven fabric.

6. Method according to any one of the preceding claims, **characterised in that** an insert (11, 19) is used with a supporting element (19) consisting of a knitted fabric made from a plastics material such as polyamide 6, polyphenylsulfone or polypropylene, interlocking elements (21) being formed from filaments of the knitted fabric.

7. Method according to any one of the preceding claims, **characterised in that** polyamide or polypropylene, preferably with glass fibre reinforcement, is used as the respective additional plastics material for the back moulding process, said material having a melting temperature that is preferably the same as or in the same region as the respective plastics material used for the fastening part (11).

8. Method according to any one of the preceding claims, **characterised in that** the same plastics material as used to manufacture the insert (11, 19) is used for the back moulding process.

9. Method according to any one of the preceding claims, **characterised in that** the side of the supporting element (19) of the insert (11, 19) which is free from the gripping or interlocking elements (21, 23) is furnished with a coating made from a polyurethane, preferably moisture-curing polyurethane, acting as a reaction agent during the back moulding process before it is placed in the injection mould (27, 29).

10. Connecting element manufactured using the method according to any one of claims 1 to 9 with a main body (9), preferably in the form of a flat disc (3), which comprises, on one side, a fastening part (11) forming a component of a hook and loop fastener with gripping or interlocking elements (21, 23) and, preferably on the other side, an anchoring device (13, 15) for fixing the main body (9) to a structure (1), and in which the respective plastics materials used for the fastening part (11) and the main body (9) are connected intrinsically together along at least one level connecting surface.

11. Connecting element according to claim 10, **characterised in that** the disc (3) is circular and the anchoring device (13, 15) comprises an anchoring pin (13) which forms one piece with the main body (9), protruding from the central region of said main body, said anchoring pin being intended to engage retainably in an opening in the structure (1).

12. Connecting element according to claim 11, **characterised in that** at least one laterally protruding retaining element (15) is provided on the anchoring pin (13).

13. Connecting element according to claim 12, **characterised in that** retaining elements in the form of diametrically opposite toggles (15) protruding from the anchoring pin (13) or spiral ribs forming an outer thread on the anchoring pin (13) are provided.

14. Tool for manufacturing a connecting element according to any one of claims 10 to 13 using the method according to any one of claims 1 to 9 with an injection mould, which comprises a first tool part (27) with a first mould cavity (31) which moulds at least a large part of the main body (9) for a back moulding process, and a second tool part (29), which closes the first mould cavity (31) during the back moulding process, forming a second mould cavity (33), in which the insert (11,19) can be placed, and in that both mould cavities (31, 33) are designed to be the same or substantially the same size.

15. Tool according to claim 14, **characterised in that** the second mould cavity (33) comprises a device (47) for positioning and retaining the inserted insert (11, 19).

16. Tool according to claim 14 or 15, **characterised in that** the second mould cavity (33) comprises a supporting surface (45) on which the insert (11, 19) with the side comprising the gripping or interlocking elements (21, 23) can be placed, and **in that** the device for positioning and retaining comprises a mould section (47) protruding from the supporting surface in the central region, said mould section engaging in an appropriately designed recess (49) in the insert (11, 19).

17. Tool according to any one of claims 14 to 16, **characterised in that** the protruding mould section takes the form of a rectangular rib (47), adapted in terms of its outline to the recess (49) in the insert (11, 19), said rib comprising an elevation in the form of a bump (51) which forms a hollow (17) in the main body (9) during the back moulding process.

18. Tool according to any one of claims 14 to 17, **characterised in that** the supporting surface (45) of the second mould cavity (33) is furnished across its entire surface with microcontouring (53) with a pattern of fine depressions (57) and elevations (55)

19. Fastening system for fixing a component (5) using at least one connecting element (3) manufactured using the method according to any one of claims 1 to 9, each connecting element (3) being assigned to an attachment element (7) connected to the component (5), said attachment element comprising gripping or interlocking elements that can be detachably engaged with the corresponding gripping or interlocking elements (21, 23) on the connecting element (3).

20. Fastening system according to claim 19, **characterised in that** the respective attachment elements (7) are designed to be disc-shaped to adjust to the shape of the connecting elements (3).

21. Fastening system according to claim 19 or 20, **characterised in that**, for the purpose of securing the position of a floor mat (5) in a vehicle, the respective connecting elements (3) can be anchored to the vehicle floor and the attachment elements (7) are attached to the floor mat (5).

## Revendications

1. Procédé de fabrication d'une partie (3) de liaison, en utilisant un procédé de moulage par injection, dans lequel, dans un premier stade, on fabrique un constituant d'une partie (11) de fermeture formant une fermeture autoagrippante et ayant des éléments (21, 23) d'agrippage ou d'accrochage, au moins en partie, en au moins une matière plastique, et on l'introduit, comme prisonnier, dans un moule (27, 29) de moulage par injection, dans lequel, dans un deuxième stade, au moyen d'une opération d'injection arrière, on introduit au moins une autre matière plastique dans le moule (27, 29) de moulage par injection, sous une pression pouvant être donnée à l'avance et à une température pouvant être donné à l'avance, en formant une embase (9), de manière à ce que, respectivement, l'autre matière plastique constitue, au moins en partie, avec la au moins une matière plastique de la partie (11) de fermeture, une masse fondue commune, après le refroidissement de laquelle la partie (11) de fermeture, reliée à coopération de matière à l'embase (9), constitue la partie (3) de liaison, sous la forme d'une pièce d'ensemble d'un seul tenant.

2. Procédé suivant la revendication 1, **caractérisé en ce que** l'on fabrique la partie (11) de fermeture formant le prisonnier en une matière plastique ayant une partie (19) de support suivant une surface, sur une face de laquelle les éléments (21, 23) d'agrippage ou d'accrochage, d'un seul tenant avec la partie (19) de support, sont en saillie.

3. Procédé suivant la revendication 2, **caractérisé en ce que** la partie (19) de support est maintenue sur sa face tournée vers l'embase (9) sans élément d'ancrage, comme des éléments (18, 20, 22, 25) en forme de champignon, de crochet ou de boucle, afin d'obtenir, sur des régions assez grandes, une liaison par fusion, suivant une surface et s'étendant de manière plane, entre les matières plastiques de la partie (11) de fermeture et de l'embase (9) dans le moule (27, 29) de moulage par injection.

4. Procédé suivant l'une des revendications 1 à 3, **caractérisé en ce que** l'on utilise un prisonnier (19, 11), dont les éléments (21, 23) d'agrippage ou d'accrochage sont formés, au moyen d'un outil de moulage, en la matière thermoplastique de la partie (19) de support, comme du polyamide 6, du polyamide 6.6, du polyamide 12.

5. Procédé suivant l'une des revendications précédente, **caractérisé en ce que** l'on utilise un prisonnier (11, 19) ayant une partie (19) de support constitué en un tissé, en une matière plastique, comme du polyamide 6, du polyamide 6.6, de la polyphénylsulfone, des éléments (21) d'accrochage étant constitués de filaments du tissé.

6. Procédé suivant l'une des revendications précédentes, **caractérisé en ce que** l'on utilise un prisonnier (11, 19) ayant une partie (19) de support constitué d'un tricot, en une matière plastique, comme du polyamide 6, de la polypénylsufone, du polypropylène, des éléments (21) d'accrochage étant formés de filaments du tricot.

7. Procédé suivant l'une des revendications précédentes, **caractérisé en ce que** l'on utilise, comme respectivement une autre matière plastique pour l'opération d'injection arrière, du polyamide ou du polypropylène, de préférence renforcé par de la fibre de verre, qui a un point de fusion, de préférence égal à celui de la matière plastique utilisée, respectivement, pour la partie (11) de fermeture ou dans la même plage.

8. Procédé suivant l'une des revendications précédentes, **caractérisé en ce que** l'on utilise, pour l'opération d'injection arrière, la même matière plastique que pour la fabrication du prisonnier (11, 19).

9. Procédé suivant l'une des revendications précédentes, **caractérisé en ce que** l'on munit la face, sans les éléments (21, 23) d'agrippage ou d'accrochage, de la partie (19) de support du prisonnier (11, 19), avant l'introduction dans le moule (27, 29) de moulage par injection, d'un revêtement en un polyuréthane agissant comme intermédiaire de réaction lors de l'opération d'injection arrière, de préférence du polyuréthane se réticulant à l'humidité.

10. Partie de liaison fabriquée par le procédé suivant l'une des revendications 1 à 9 et ayant une embase (9), dé préférence sous la forme d'un disque (3) plat, qui a, sur une face, une partie (11) de fermeture formant un constituant d'une fermeture autoagrippante et ayant des éléments (21, 23) d'agrippage ou d'accrochage, et de préférence, sur l'autre face, un dispositif (13, 15) d'ancrage pour fixer l'embase (9) à une structure (1), et dans laquelle les matières plastiques utilisées, respectivement, de la partie (11) de fermeture et de l'embase (9), sont reliées l'une à l'autre intrinsèquement suivant au moins une surface de liaison s'étendant de manière plane.

11. Partie de liaison suivant la revendication 10, **caractérisée en ce que** le disque (3) est circulaire et le dispositif (13, 15) d'ancrage a un tourillon (13) d'ancrage d'une pièce avec l'embase (9) et faisant saillie de sa partie centrale, qui est prévue pour pénétrer avec maintien dans une ouverture de la structure (1).

12. Partie de liaison suivant la revendication 11, **caractérisée en ce qu'**au moins un élément (15) de maintien en saillie latéralement est prévu sur le tourillon (13) d'ancrage.

13. Partie de liaison suivant la revendication 12, **caractérisée en ce qu'**il est prévu des éléments de maintien sous la forme de manettes (15) en saillie, diamétralement l'une par rapport à l'autre, du tourillon (13) d'ancrage ou de nervures en spirale formant un filetage extérieur du tourillon (13) d'ancrage.

14. Outil de fabrication d'une partie de liaison suivant l'une des revendications 10 à 13, au moyen du procédé suivant l'une des revendications 1 à 9, comprenant un moule de moulage par injection, qui, pour une opération d'injection arrière, a une première partie (27) d'outil ayant une première empreinte (31), qui moule au moins une grande partie de l'embase (9), ainsi qu'une deuxième partie (29) d'outil, qui, lors de l'opération d'injection arrière, ferme la première empreinte (31), en formant une deuxième empreinte (33), dans laquelle le prisonnier (11, 19) peut être introduit, et en ce que les deux empreintes (31, 33) sont égales ou sont constituées en ayant sensiblement la même dimension.

15. Outil suivant la revendication 14, **caractérisé en ce que** la deuxième empreinte (33) a un dispositif (47) de mise en position et de maintien du prisonnier (11, 19) introduit.

16. Outil suivant la revendication 14 ou 15, **caractérisé en ce que** la deuxième empreinte (33) a une surface (45) d'application, à laquelle le prisonnier (11, 19) peut être appliqué par la face ayant les éléments (21, 23) d'agrippage ou d'accrochage et **en ce que** le dispositif de mise en position et de maintien a une partie (47) de moule faisant saillie dans la partie centrale de la surface d'application et pénétrant dans un évidement (49) constitué de manière adaptée dans le prisonnier (11, 19).

17. Outil suivant l'une des revendications 14 à 16, **caractérisé en ce que** la partie en saillie du moule a la forme d'une nervure rectangulaire, qui est adaptée en contour à l'évidement (49) du prisonnier (11, 19) et qui a une partie proéminente, sous la forme d'une bosse (51), formant, lors de l'opération d'injection arrière, une cuvette (17) dans l'embase (9).

18. Outil suivant l'une des revendications 14 à 17, **caractérisé en ce que** la surface (45) d'application de la deuxième empreinte (33) est pourvue, sur toute sa surface, d'un microcontour (53) ayant un motif de cavités (57) et de parties (53) proéminentes fines.

19. Système de fixation pour fixer une pièce (5) au moyen d'une partie (3) de liaison fabriqué par le procédé suivant l'une des revendications 1 à 9, dans lequel, à chaque partie (3) de liaison, est associée une partie (7) de montage, qui est reliée à la pièce (5) et qui a des éléments d'agrippage ou d'accrochage, qui peuvent être mis en prise, de manière redétachable, avec les éléments (21, 23) correspondants d'agrippage ou d'accrochage de la partie (3) de liaison.

20. Système de fixation suivant la revendication 19, **caractérisé en ce que** les parties (7) de montage respectives sont conformées en disque en adaptation à la forme des parties (3) de liaison.

21. Système de fixation suivant la revendication 19 ou 20, **caractérisé en ce que**, pour fixer en position un tapis (5) de sol d'un véhicule automobile, les parties (3) de liaison respectives peuvent être arrimées au fond (1) du véhicule et les parties (7) de montage sont montées sur le tapis (5) de sol.
